# EUROPEAN PATENT APPLICATION

(11) **EP 4 007 215 A1**
(43) Date of publication of application: **01.06.2022**
(21) Application number: 19945988.4
(22) Date of filing: 09.10.2019
(51) Int. Cl.: H04L 12/26, H04L 29/08, H04L 12/14

(54) **METHOD FOR PREHEATING RESOURCE FILE, AND CENTRAL MANAGEMENT SYSTEM**

(30) Priority: 20.09.2019 CN 201910892837
(71) Applicant: Wangsu Science & Technology Co., Ltd., Shanghai 200030 (CN)
(72) Inventor: LV, Chaoxin, Xuhui District Shanghai 200030 (CN); CAI, Jinhui, Xuhui District Shanghai 200030 (CN)
(74) Representative: De Arpe Tejero, Manuel
(86) International application number: PCT/CN2019/110154
(87) International publication number: WO 2021/051457

(57) **Abstract**

The present disclosure discloses a method for preheating a resource file, and a central management system, and relates to the field of network communication technology. The method includes: according to historical bandwidth data of a target intermediate node, determining a bandwidth off-peak period of the target intermediate node; during the bandwidth off-peak period of the target intermediate node, pre-caching the resource file on an edge node corresponding to the target intermediate node. By adopting the present disclosure, bandwidth costs of intermediate nodes of a CDN cluster can be reduced.

## Description

### TECHNICAL FIELD

The present disclosure relates to the field of network communication technology, and more particularly, to a method for preheating a resource file and a central management system.

### BACKGROUND

In a CDN cluster, most of data resources are pre-deployed on edge nodes that are closer to user terminals than source stations. When the user terminals need to obtain the data resources, the user terminals may download the data resources from nearby edge nodes in shorter time, to achieve the effect of accelerating network access.

Intermediate nodes are widely added to network architectures of the existing CDN clusters. The intermediate nodes are deployed between the edge nodes and the source stations to cache the data resources of the source stations, such that bandwidth pressures on the source stations are reduced. Specifically, when the edge node receives resource obtaining requests from the user terminals, if no corresponding data resources are stored locally, the edge nodes may obtain the data resources from their corresponding intermediate nodes without having to go back to the source stations to download the data resources. When cache files of the intermediate nodes are expired or absent, the intermediate nodes may go back to the source stations to obtain the corresponding cache files, and transmit the cache files to the edge nodes and cache them locally for subsequent downloading by other edge nodes.

At present, most of bandwidth charging modes of the intermediate nodes are based on peak bandwidths. That is, one chargeable bandwidth is selected based on an actual peak bandwidth (for example, a fourth highest peak bandwidth or 95% of the peak bandwidth is selected), and then bandwidth charging is performed based on this chargeable bandwidth. For CDN manufacturers, the introduction of the intermediate nodes means higher bandwidth costs. Therefore, in the highly competitive CDN market, how to effectively reduce the bandwidth costs generated by the intermediate nodes has become a key issue in the field.

### SUMMARY

To solve problems of the prior art, embodiments of the present disclosure provide a method for preheating a resource file and a central management system. The technical solutions are described as follows.

In a first aspect, there is provided a method for preheating a resource file, and the method includes:
according to historical bandwidth data of a target intermediate node, determining a bandwidth off-peak period of the target intermediate node; and
during the bandwidth off-peak period of the target intermediate node, pre-caching the resource file on an edge node corresponding to the target intermediate node.

In a second aspect, a central management system is provided, wherein the central management system is applied to a CDN cluster, and the central management system is configured to:
according to historical bandwidth data of a target intermediate node, determine a bandwidth off-peak period of the target intermediate node; and
during the bandwidth off-peak period of the target intermediate node, pre-cache the resource file on an edge node corresponding to the target intermediate node.

The technical solutions provided by the embodiments of the present disclosure have the following beneficial effects.

In some embodiments of the present disclosure, the bandwidth off-peak period of the target intermediate node is determined according to the historical bandwidth data of the target intermediate node; and during the bandwidth off-peak period of the target intermediate node, the resource file is pre-cached on the edge node corresponding to the target intermediate node. In this way, by utilizing access habits of a user and charging rules of an intermediate node, the central management system may pre-cache the resource file on the edge node during the bandwidth off-peak period of the intermediate node, such that a resource hit rate of the edge node is increased during a bandwidth peak period, and traffics flowing back to the intermediate node are reduced, which can reduce a peak bandwidth and a chargeable bandwidth for the intermediate node, and finally achieve an objective of reducing bandwidth costs for the intermediate node.

### BRIEF DESCRIPTION OF THE DRAWINGS

To describe the technical solutions of embodiments of the present disclosure more clearly, the accompanying drawings required for describing the embodiments will be briefly introduced below. Apparently, the accompanying drawings in the following description are merely some embodiments of the present disclosure. To those of ordinary skills in the art, other accompanying drawings may also be derived from these accompanying drawings without creative efforts.
FIG. 1 is a network framework diagram of a CDN cluster according to an embodiment of the present disclosure;
FIG. 2 is a schematic flowchart of a method for preheating a resource file according to an embodiment of the present disclosure;
FIG. 3 is a schematic curve chart showing bandwidth consumption curve of an intermediate node according to an embodiment of the present disclosure; and
FIG. 4 is a schematic curve chart showing bandwidth consumption curve of an intermediate node according to another embodiment of the present disclosure.

### DETAILED DESCRIPTION

To make the objectives, technical solutions and advantages of the present disclosure clearer, the embodiments of the present disclosure will be further described below in detail with reference to the accompanying drawings.

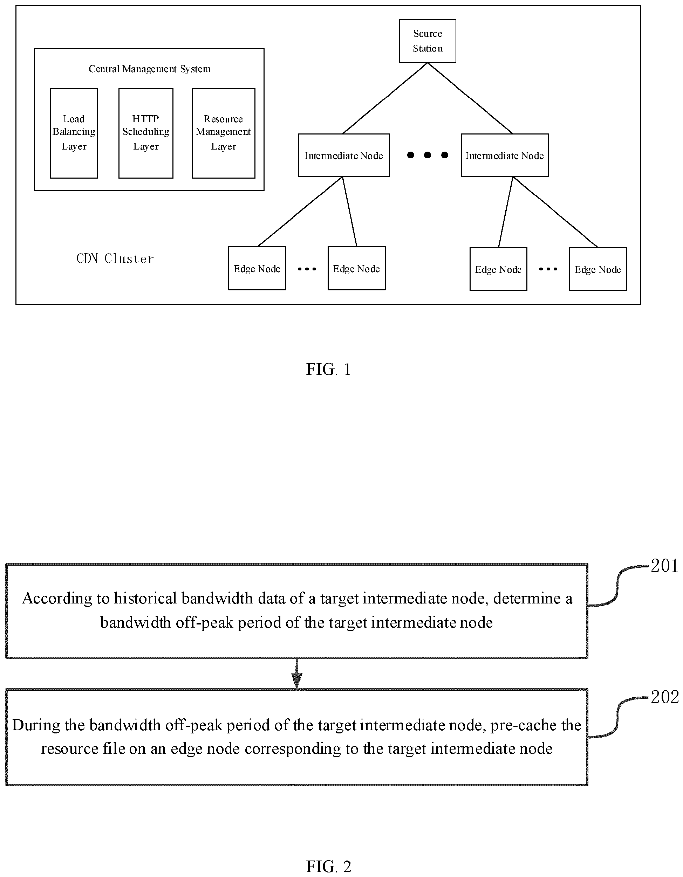

The embodiments of the present disclosure provide a method for preheating a resource file. An execution subject of the method may be a central management system of a CDN cluster. As shown in FIG. 1, the central management system may be configured to perform unified management and scheduling on a service request from a user, a load balance of a node, and a cache status of a resource. The central management system may include at least a load balancing layer, an HTTP (Hyper Text Transfer Protocol) scheduling layer, and a resource management layer. The load balancing layer may be configured to guide, in response to a DNS (Domain Name System) resolution request from the user, a resource obtaining request from the user to the HTTP scheduling layer. The HTTP scheduling layer may be configured to allocate, based on the resource obtaining request received, an edge node providing CDN acceleration services to the user. The resource management layer may be configured to manage data resources on each node in the CDN cluster, including caching, deleting and updating the resource file. In this embodiment, the overall central management system is used as an execution subject for description, and information interaction between parts in the central management system may be introduced in detail where necessary. An internal structure of the central management system as shown in FIG. 1 is only a feasible way of division. In different embodiments, functions of the central management system are basically the same, and a specific structure division may be determined according to different requirements.

A processing flow as shown in FIG. 2 will be described below in detail with reference to specific implementations.

Step 201: according to historical bandwidth data of a target intermediate node, determining a bandwidth off-peak period of the target intermediate node.

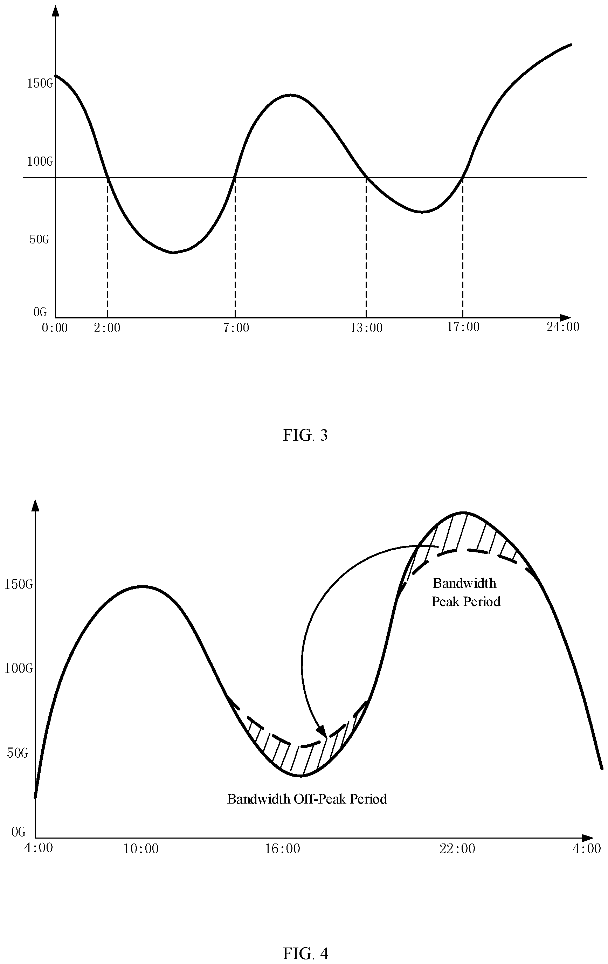

In implementation, the central management system may monitor and record bandwidth data of each intermediate node in the CDN cluster, and regulate and manage the intermediate node based on the bandwidth data of the intermediate node. Specifically, in a process of operation of the intermediate node, a resource obtaining request of the edge node is received, and then the resource obtaining request is responded to or returned to a source to download related data resources according to storage situations of the local resources. In the above process, a large number of bandwidth resources will be consumed on the intermediate node, and the central management system may record the bandwidth resource consumption of the intermediate node and generate historical bandwidth data of the intermediate node. Furthermore, taking the target intermediate node as an example, the central management system may determine the bandwidth off-peak period (that is, a period of lower bandwidth resource consumption) of the target intermediate node according to the historical bandwidth data of the target intermediate node. For example, in a bandwidth consumption curve of the intermediate node as shown in FIG. 3, where an abscissa axis represents time and an ordinate axis represents bandwidth consumption. Based on preset standards (for example, the bandwidth consumption is below a preset threshold, or the bandwidth consumption is less than 70% of a peak bandwidth), a plurality of time periods such as 13:00-17:00 and 2:00-7:00 within a day may be determined as the bandwidth off-peak period.

It is to be understood that due to influences of going-online behaviors of the user, different intermediate nodes may have different bandwidth off-peak periods, and the same intermediate node may have different bandwidth off-peak periods in different periods (such as months and quarters). Therefore, the central management system may determine, preferably at the moment of 0:00 every day, the bandwidth off-peak period of the target intermediate node that day according to the historical bandwidth data of the target intermediate node one or more days before. Of course, the bandwidth off-peak period of the intermediate node may also be manually inputted into the central management system by a technician.

Step 202: during the bandwidth off-peak period of the target intermediate node, pre-caching the resource file on an edge node corresponding to the target intermediate node.

For example, when an edge node A needs to obtain a new data resource, the edge node A sends a corresponding resource obtaining request to the target intermediate node, wherein the edge node A is the edge node corresponding to the target intermediate node.

In implementation, after the bandwidth off-peak period of the target intermediate node is determined, the central management system may pre-cache the resource file on the edge node corresponding to the target intermediate node during the bandwidth off-peak period of the target intermediate node. Specifically, the resource management layer in the central management system may trigger, by sending a resource distribution instruction to the target intermediate node, the target intermediate node to actively send related resource files to the edge node; or the resource management layer in the central management system may trigger, by sending a resource obtaining instruction to the edge node corresponding to the target intermediate node, the edge node to actively request related resource files from the target intermediate node. It is to be understood that according to a bandwidth charging mode of the intermediate node, a chargeable bandwidth is selected based on a peak bandwidth within one charging cycle, and then the chargeable bandwidth serves as a charging standard. Therefore, when the resource file is pre-cached on the edge node during the bandwidth off-peak period, in one aspect, the bandwidth consumption of the intermediate node during the bandwidth off-peak period is difficult to reach the peak bandwidth, and in another aspect, traffics of data resources requested by the edge node from the intermediate node during a bandwidth peak period can be reduced (that is, the peak bandwidth is reduced), which can effectively reduce the chargeable bandwidth, and thus can reduce bandwidth costs of the intermediate node.

It is worth mentioning that preheating a file on the edge node may lead to increase of inflow bandwidth on the edge node. Therefore, preheating the file during the bandwidth off-peak period can reduce extra bandwidth costs incurred by excessive inflow bandwidth on the edge node. Meanwhile, according to the bandwidth charging mode, a higher value of an outgoing bandwidth and the inflow bandwidth is selected for charging, and generally the inflow bandwidth of the edge node is much smaller than the outgoing bandwidth. Therefore, the above file preheating can reduce the bandwidth costs of the intermediate node without increasing bandwidth costs of the edge node.

Referring to a bandwidth consumption graph of the intermediate node as shown in FIG. 4, a resource file is preheated on the edge node during the bandwidth off-peak period, which is equivalent to scheduling a part of traffics of the intermediate node during the bandwidth peak period to the bandwidth off-peak period. In this way, the peak bandwidth of the intermediate node during the bandwidth peak period can be reduced, and thus the bandwidth costs of the intermediate node can be reduced.

Alternatively, there are various trigger mechanisms for preheating a resource file. Two feasible modes are given as follows.

Mode I: a file to be added is periodically determined according to a preset resource preheating condition, and the file to be added is cached on the edge node corresponding to the target intermediate node.

The resource preheating condition may be a resource screening condition preset in the central management system, and is configured for screening a resource file that needs to be preheated on the edge node. For example, the resource preheating condition may be that number of resource access times is greater than a preset value, or may belong to data resources designated by a resource provider, etc.

In implementation, during the bandwidth off-peak period of the target intermediate node, the central management system may periodically determine the file to be added according to the preset resource preheating condition. For example, the central management system may determine whether there emerges a new resource file that meets the resource preheating condition every other hour. If there emerges such a new resource file, this resource file may be determined as the file to be added. After that, the central management system may cache the file to be added on the edge node corresponding to the target intermediate node. In this way, resource files are uniformly cached on the edge node according to a preset period, which can reduce number of caching times to a certain extent and save device processing resources.

Mode II: when a target resource file meeting a preset resource preheating condition is detected, the target resource file is cached on the edge node corresponding to the target intermediate node.

In implementation, during the bandwidth off-peak period of the target intermediate node, the central management system may perform real-time detection on all resource files based on the preset resource preheating condition. When detecting a target resource file that meets the preset resource preheating condition, the central management system may cache the target resource file on the edge node corresponding to the target intermediate node. In this way, when there emerges a resource file that meets the resource preheating condition, this resource file may be cached in time, which can effectively avoid omission of caching the resource file on the edge node.

Alternatively, a hot resource file may be pre-cached on the edge node. Correspondingly, processing of Step 202 may include: determining the hot resource file according to a historical resource obtaining request from the user; and pre-caching the hot resource file on the edge node corresponding to the target intermediate node.

In implementation, when the user accesses a certain domain name through a terminal, the terminal may send a corresponding DNS resolution request to a DNS system. If a CDN acceleration service is activated for the domain name, a CNAME of the domain name in the DNS system will point to the load balancing layer of the CDN cluster. Therefore, after receiving the above DNS resolution request, the DNS system may recursively/iteratively search out corresponding CNAME information, then obtain an IP address of the HTTP scheduling layer from the load balancing layer, and then feed the IP address back to the terminal. After the IP address is obtained, the terminal may establish a connection with the HTTP scheduling layer and send a resource obtaining request to the HTTP scheduling layer. The HTTP scheduling layer may select an optimal edge node according to an area where IP of the terminal is located and load situations of the edge node, and return a 302 jump request to the terminal, such that the terminal may access the optimal edge node by means of the IP address pointed to by the 302 jump request. In this way, because of presence of the HTTP scheduling layer, in one aspect, the optimal edge node may be allocated to the terminal based on the resource obtaining request from the terminal, and in another aspect, the resource obtaining requests from the user may be counted to determine popularity degree of each data resource. Therefore, during the bandwidth off-peak period of the target intermediate node, the central management system may determine a hot resource file based on the historical resource obtaining request from the user, and then pre-cache the hot resource file on the edge node corresponding to the target intermediate node. In this way, the central management system may pre-cache the hot resource file, which not only can greatly reduce number of resources requested by the edge node from the intermediate nodes during the bandwidth peak period, but also can increase resource hit rate on the edge node and reduce ineffective resource preheating.

Alternatively, resources may be only pre-cached on a peak standby edge node. Correspondingly, processing of Step 202 may include: pre-caching the resource file on the peak standby edge node corresponding to the target intermediate node.

The peak standby edge node may be an edge node that provides the CDN acceleration services only during the bandwidth peak period to relieve load pressure on an ordinary edge node but is continuously in an idle state during the bandwidth off-peak period.

In implementation, to ensure quality of the CDN acceleration services while taking service costs into account, the CDN cluster may be specially provided with the peak standby edge node, which is merely put into use during the bandwidth peak period to respond to the user's requests. Considering that there is a high probability that the ordinary edge node has obtained a large number of data resources from the intermediate node or a source station based on the user's requests outside the bandwidth peak period, the central management system does not need to pre-heat additional resource files for the ordinary edge node. Instead, the central management system may pre-cache the resource file only on the peak standby edge node. In this way, during the bandwidth off-peak period of the target intermediate node, the central management system may pre-cache the resource file on the peak standby edge node corresponding to the target intermediate node. It is to be readily understood that the peak standby edge node corresponding to the target intermediate node is a peak standby edge node that needs to obtain data resources from the target intermediate node in the process of operation.

Alternatively, during resource preheating, different resource files may be preheated on different peak standby edge nodes according to demands of users in different areas. The corresponding processing may include: for a target peak standby edge node corresponding to the target intermediate node, determining a target service area corresponding to the target peak standby edge node; determining a hot resource file corresponding to the target service area according to a historical resource obtaining request from a user within the target service area; and pre-caching the hot resource file on the target peak standby edge node.

In implementation, during the bandwidth off-peak period of the target intermediate node, the central management system may pre-heat different resource files on the peak standby edge node corresponding to the target intermediate node. Taking the target peak standby edge node as an example, the central management system may first determine the target service area corresponding to the target peak standby edge node, and then screen out the historical resource obtaining request from the user within the target service area from a record of historical resource obtaining requests. Further, the central management system may determine hot resource files corresponding to the target service area according to the historical resource obtaining request screen out, and pre-cache these hot resource files on the target peak standby edge node. It is to be understood that there exists a certain correlation between hobbies and concerns of the user and a regional environment where the user is located, so hot resources in different service areas may also be different. Thus, these hot resource files may be pre-heated on the peak standby edge nodes within different service areas, such that hit rates of resource files on the peak standby edge nodes can be increased, and thus bandwidth consumptions of the intermediate node during the bandwidth peak period may be further reduced to reduce the bandwidth costs of the intermediate node.

Alternatively, preheating the resource file may be directly triggered by means of a resource preheating instruction. Correspondingly, processing of Step 202 may include: receiving a resource preheating instruction carrying a mapping relationship between a target node identifier and a target uniform resource locator (URL); and pre-caching a resource file corresponding to the target URL on the edge node corresponding to the target node identifier.

The target node identifier may be information that may be configured to identify one or more edge nodes, such as an IP address of the edge node, a device number, deployment location information of the edge node, or a service area of the edge node.

In implementation, a technical of the CDN cluster may comprehensively consider factors such as resource access situations of the users and release statuses of the data resources, and manually judge which resource files need to be pre-deployed on which edge nodes. Next, the technician may input the above judgment result into the central management system in the form of resource preheating instruction, wherein the resource preheating instruction may carry the target node identifier and the target URL. After receiving the above-mentioned resource preheating instruction, the central management system may pre-heat the resource file according to the target node identifier and the target URL carried in the resource preheating instruction. That is, the resource file corresponding to the target URL is pre-cached on the edge node corresponding to the target node identifier. In addition, the above resource preheating instruction may be sent to the central management system by a CDN customer (i.e., a resource provider that has activated the CDN acceleration services), and the CDN customer may trigger, by means of a resource caching instruction, the central management system to pre-deploy designated resource files on designated edge nodes. It is worth mentioning that if the resource preheating instruction only carries the target URL but does not carry any node identifier, the resource file corresponding to the target URL may be cached on all edge nodes by default.

Alternatively, there are various ending mechanisms for preheating the resource file, and two feasible modes are given as follows.

Mode I: when the bandwidth off-peak period is ended, it is stopped caching the resource file for the edge node corresponding to the target intermediate node.

In implementation, when preheating the resource file on the edge node corresponding to the target intermediate node, the central management system may monitor in real time whether a current moment is still in the bandwidth off-peak period of the target intermediate node. When detecting the end of the bandwidth off-peak period, the central management system may stop caching the resource file for the edge node corresponding to the target intermediate node to avoid occurrence of the chargeable bandwidth increased and the bandwidth costs increased due to excessive bandwidth consumptions at the target intermediate node.

Mode II: when detecting that a real-time bandwidth of the target intermediate node exceeds the chargeable bandwidth of the target intermediate node, it is stopped caching the resource file for the edge node corresponding to the target intermediate node.

In implementation, the central management system may monitor a real-time bandwidth of the target intermediate node in real time when preheating the resource file on the edge node corresponding to the target intermediate node. When it is detected that the real-time bandwidth of the target intermediate node exceeds the chargeable bandwidth of the target intermediate node, the central management system may stop caching the resource file on the edge node corresponding to the target intermediate node to avoid occurrence of the chargeable bandwidth increased and the bandwidth costs increased due to excessive bandwidth consumptions at the target intermediate node. It is to be understood that in addition to the chargeable bandwidth, other reasonable bandwidth warning values may also be set. When the target intermediate node exceeds the bandwidth warning value, the central management system may stop caching the corresponding resource file.

In some embodiments of the present disclosure, the bandwidth off-peak period of the target intermediate node is determined according to the historical bandwidth data of the target intermediate node; and during the bandwidth off-peak period of the target intermediate node, the resource file is pre-cached on the edge node corresponding to the target intermediate node. In this way, by utilizing access habits of a user and charging rules of an intermediate node, the central management system may pre-cache the resource file on the edge node during the bandwidth off-peak period of the intermediate node, such that a resource hit rate of the edge node is increased during a bandwidth peak period, and traffics flowing back to the intermediate node are reduced, which can reduce a peak bandwidth and a chargeable bandwidth for the intermediate node, and finally achieve an objective of reducing bandwidth costs for the intermediate node.

Based on the same technical concept, the embodiments of the present disclosure also provide a central management system, wherein the central management system is applied to a CDN cluster, and the central management system is configured to:
according to historical bandwidth data of a target intermediate node, determine a bandwidth off-peak period of the target intermediate node; and
during the bandwidth off-peak period of the target intermediate node, pre-cache the resource file on an edge node corresponding to the target intermediate node.

Alternatively, the central management system is specifically configured to:
periodically determine a file to be added according to a preset resource preheating condition, and cache the file to be added on the edge node corresponding to the target intermediate node.

Alternatively, the central management system is specifically configured to:
when a target resource file meeting a preset resource preheating condition is detected, cache the target resource file on the edge node corresponding to the target intermediate node.

Alternatively, the central management system is specifically configured to:
determine a hot resource file according to a historical resource obtaining request from a user; and
pre-cache the hot resource file on the edge node corresponding to the target intermediate node.

Alternatively, the central management system is specifically configured to:
pre-cache the resource file on a peak standby edge node corresponding to the target intermediate node.

Alternatively, the central management system is specifically configured to:
for a target peak standby edge node corresponding to the target intermediate node, determine a target service area corresponding to the target peak standby edge node;
determine a hot resource file corresponding to the target service area according to a historical resource obtaining request from a user within the target service area; and
pre-cache the hot resource file on the target peak standby edge node.

Alternatively, the central management system is specifically configured to:
receive a resource preheating instruction carrying a mapping relationship between a target node identifier and a target uniform resource locator (URL); and
pre-cache a resource file corresponding to the target URL on the edge node corresponding to the target node identifier.

Alternatively, the central management system is also configured to:
when the bandwidth off-peak period is ended, stop caching the resource file for the edge node corresponding to the target intermediate node.

Alternatively, the central management system is also configured to:
when detecting that a real-time bandwidth of the target intermediate node exceeds a chargeable bandwidth of the target intermediate node, stop caching the resource file for the edge node corresponding to the target intermediate node.

In some embodiments of the present disclosure, the bandwidth off-peak period of the target intermediate node is determined according to the historical bandwidth data of the target intermediate node; and during the bandwidth off-peak period of the target intermediate node, the resource file is pre-cached on the edge node corresponding to the target intermediate node. In this way, by utilizing access habits of a user and charging rules of an intermediate node, the central management system may pre-cache the resource file on the edge node during the bandwidth off-peak period of the intermediate node, such that a resource hit rate of the edge node is increased during a bandwidth peak period, and traffics flowing back to the intermediate node are reduced, which can reduce a peak bandwidth and a chargeable bandwidth for the intermediate node, and finally achieve an objective of reducing bandwidth costs for the intermediate node.

It should be understood for those of ordinary skill in the art that all or a part of steps in the above embodiments may be implemented by hardware, or by programs instructing the related hardware. The programs may be stored in a computer-readable storage medium. The storage medium described as above may be a red-only memory, a magnetic disc, an optical disc or the like.

The embodiments described above are only illustrated as preferred embodiments of the present disclosure, and are not intended to limit the present disclosure. All modifications, equivalent substitutions and improvements made within the spirit and principles of the present disclosure shall fall within the protection scope of the present disclosure.

## Claims

1. A method for preheating a resource file, comprising:
according to historical bandwidth data of a target intermediate node, determining a bandwidth off-peak period of the target intermediate node; and
during the bandwidth off-peak period of the target intermediate node, pre-caching the resource file on an edge node corresponding to the target intermediate node.

2. The method according to claim 1, wherein the pre-caching the resource file on an edge node corresponding to the target intermediate node comprises:
periodically determining a file to be added according to a preset resource preheating condition, and caching the file to be added on the edge node corresponding to the target intermediate node.

3. The method according to claim 1, wherein the pre-caching the resource file on an edge node corresponding to the target intermediate node comprises:
when a target resource file meeting a preset resource preheating condition is detected, caching the target resource file on the edge node corresponding to the target intermediate node.

4. The method according to claim 1, wherein the pre-caching the resource file on an edge node corresponding to the target intermediate node comprises:
determining a hot resource file according to a historical resource obtaining request from a user; and
pre-caching the hot resource file on the edge node corresponding to the target intermediate node.

5. The method according to claim 1, wherein the pre-caching the resource file on an edge node corresponding to the target intermediate node comprises:
pre-caching the resource file on a peak standby edge node corresponding to the target

6. The method according to claim 5, wherein the pre-caching the resource file on a peak standby edge node corresponding to the target intermediate node comprises:
for a target peak standby edge node corresponding to the target intermediate node, determining a target service area corresponding to the target peak standby edge node;
determining a hot resource file corresponding to the target service area according to a historical resource obtaining request from a user within the target service area; and
pre-caching the hot resource file on the target peak standby edge node.

7. The method according to claim 1, wherein the pre-caching the resource file on an edge node corresponding to the target intermediate node comprises:
receiving a resource preheating instruction carrying a mapping relationship between a target node identifier and a target uniform resource locator (URL); and
pre-caching a resource file corresponding to the target URL on the edge node corresponding to the target node identifier.

8. The method according to claim 1, wherein after the pre-caching the resource file on an edge node corresponding to the target intermediate node, the method further comprises:
when the bandwidth off-peak period is ended, stopping caching the resource file for the edge node corresponding to the target intermediate node.

9. The method according to claim 1, wherein after the pre-caching the resource file on an edge node corresponding to the target intermediate node, the method further comprises:
when detecting that a real-time bandwidth of the target intermediate node exceeds a chargeable bandwidth of the target intermediate node, stopping caching the resource file for the edge node corresponding to the target intermediate node.

10. A central management system, wherein the central management system is applied to a CDN cluster, the central management system being configured to:
according to historical bandwidth data of a target intermediate node, determine a bandwidth off-peak period of the target intermediate node; and
during the bandwidth off-peak period of the target intermediate node, pre-cache the resource file on an edge node corresponding to the target intermediate node.
